Europäisches Patentamt

European Patent Office

Office européen des brevets

(11) Publication number: **0 359 064**
**A2**

## EUROPEAN PATENT APPLICATION

(21) Application number: **89116188.7**

(22) Date of filing: **01.09.89**

(51) Int. Cl.5: **G06F 13/00**

(30) Priority: **15.09.88 US 244972**

(43) Date of publication of application:
**21.03.90 Bulletin 90/12**

(84) Designated Contracting States:
**DE FR GB IT**

(71) Applicant: **Hewlett-Packard Company**
**3000 Hanover Street**
**Palo Alto California 94304(US)**

(72) Inventor: **Bauer, Keith U.**
**237 Breuner Drive 3**
**Roseville California 95678(US)**

(74) Representative: **Liesegang, Roland, Dr.-Ing. et al**
**FORRESTER & BOEHMERT**
**Widenmayerstrasse 4**
**D-8000 München 22(DE)**

(54) **Computing system.**

(57) An inexpensive to manufacture switch is presented which allows a computer terminal port to be coupled to one of a plurality of remote computer ports. The switch includes receivers (218) which receive signals from each of the remote computer ports and transforms the voltage level of the signals allowing the signals to be processed by transistor-to-transistor logic (TTL) circuits. A multiplexor (210), based on voltage levels on a series of address lines, selects one of the remote computer ports from which to receive signals. The selected signals are forwarded to a driver (219) which restores the selected signals to the original voltage level and couples the selected signals to the computer terminal port. Similarly, a receiver (217) receives signals from the computer terminal port and transforms the voltage level of these signals allowing the signals to be processed by TTL circuits. A demultiplexor (214), based on voltage levels on the series of address lines, places the signals on a line for the selected remote computer port. The signals then are forwarded to a driver (220) which restores the signals to the original voltage level and couples the signals to the selected remote computer port.

Figure 2A

Figure 2B

Figure 2

## COMPUTING SYSTEM

### Background

It is often desirable to connect a single port of a computer terminal to a number of remote computers while selecting only one remote computer at a time to be actually connected to the port. In the past, a mechanical switch has been most often used to make the connection.

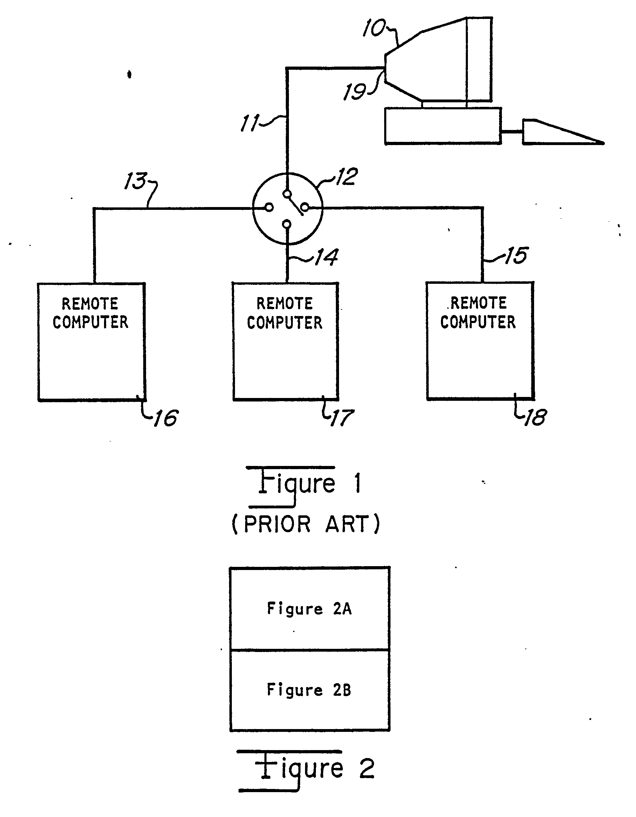

For example, in Figure 1 an RS-232 port 19 of a terminal 10 is coupled to a mechanical switch 12 through an RS-232 cable 11. Mechanical switch 12 selects whether cable 11 from terminal 10 will be coupled to an RS-232 cable 13 from a remote computer 16, an RS-232 cable 14 from a remote computer 17 or an RS-232 cable 15 from a remote computer 18.

Although the use of a mechanical switch 12 is generally effective and reliable, the cost of such a switch has been exorbitantly high. Thus there is a need for a switch which can be produced more inexpensively.

### Summary of the Invention

In accordance with the preferred embodiment of the present invention an inexpensive to manufacture switch is presented which allows a computer terminal port to be coupled to one of a plurality of remote computer ports. The switch includes receivers which receive signals from each of the remote computer ports and transforms the voltage level of the signals allowing the signals to be processed by transistor-to-transistor logic (TTL) circuits. A multiplexor, based on voltage levels on a series of address lines, selects one of the remote computer ports from which to receive signals. The selected signals are forwarded to a driver which restores the selected signals to the original voltage level and couples the selected signals to the computer terminal port.

Similarly, a receiver receives signals from the computer terminal port and transforms the voltage level of these signals allowing the signals to be processed by TTL circuits. A demultiplexor, based on voltage levels on the series of address lines, places the signals on a line for the selected remote computer port. The signals then are forwarded to a driver which restores the signals to the original voltage level and couples the signals to the selected remote computer port.

A decoder and LED driver may be connected to the address lines in order to drive an array of LEDs. The current remote computer port coupled to the terminal port is indicated by an associated LED from the plurality of LEDs being "on". A momentary on switch, a delay and a latch are used to place on the address lines voltage levels indicating which remote computer port a user wishes to couple to the computer terminal port.

### Brief Description of the Drawings

Figure 1 shows a terminal connected to a variety of remote computers through a prior art mechanical switch.

Figure 2 shows a switch in accordance with the preferred embodiment of the present invention.

### Description of the Preferred Embodiment

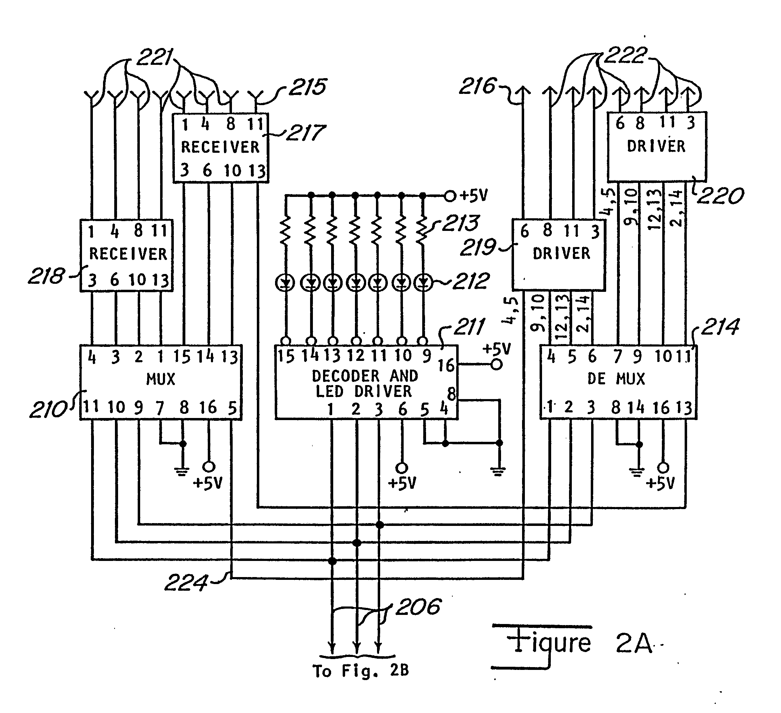

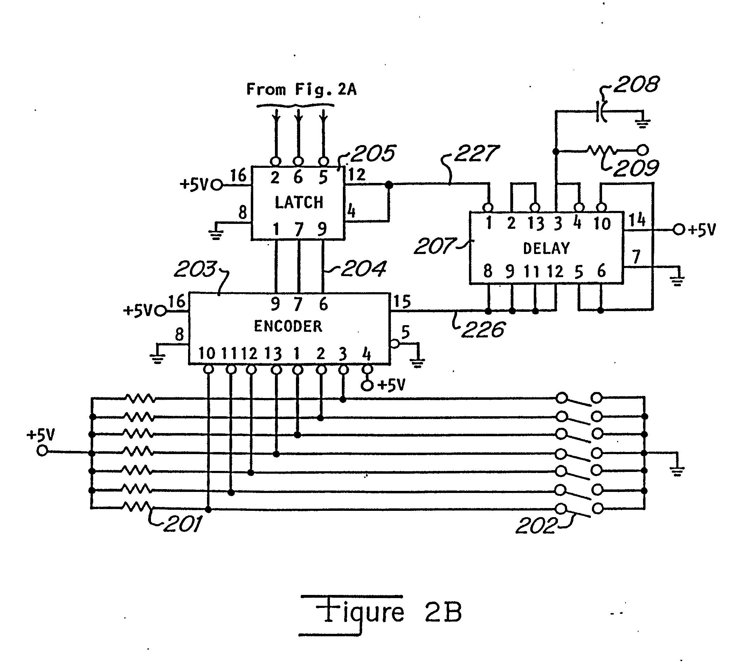

In Figure 2 a schematic of a switch according to the preferred embodiment of the present invention is shown. The switch replaces mechanical switch 12 shown in Figure 1. The switch allows a computer terminal with a single RS-232 port to be connected to one of seven RS-232 ports of remote computers. An RS-232 cable contains two lines: a transmit line and a receive line. Lines 221 are data transmit lines from RS-232 ports of remote computers. These are fed into receiver circuits 217 and 218 as shown. Receiver circuits 217 and 218 may be, for example quad-line receivers available as part number MC1489 from National Semiconductor Corporation, a California corporation having a place of business at 2900 Semiconductor Drive, Santa Clara, California 95051. Receivers 217 and 218 transform the voltage on lines 221 to a voltage level used in transistor to transistor logic (TTL) circuits. A plus twelve volt signal on one of lines 221 is transformed to a plus five volt signal by receiver 217 or 218. A minus twelve volt signal on one of lines 221 is transformed to a zero volt signal by receiver 217 or 218.

A multiplexor (MUX) 210 receives the transformed signals from receivers 217 and 218 and selects one of the seven signals to be placed on line 224. The line is selected based on the value of address lines 206. MUX 210 is available, for example, as part number 74LS151 from Texas Instruments Incorporated having a mailing address of Post Office Box 225012, Dallas Texas, 75265.

Line 224 is sent through a driver circuit 219 to a line 216. Line 216 is the data receive line which is connected to RS-232 port 19 of terminal 10.

Driver circuit 219 may be, for example a quad-line driver available as part number MC1488 from National Semiconductor Corporation. Driver circuit 219 transforms the voltage on line 224 from a voltage level used in transistor to transistor logic (TTL) circuits back to that used by RS-232 ports. A plus five volt signal on line 224 is transformed to a plus twelve volt signal. A zero volt signal on line 224 is transformed to a minus twelve volt signal.

A line 215 is the data transmit line which is connected to RS-232 port 19 of terminal 10. Receiver circuit 217 receives line 215, transforms the signal and feeds the signal to a demultiplexor (DEMUX) 214. DEMUX 214 places the signal from line 215 onto one of DEMUX 214's output lines. These lines are connected through driver 219 and a driver 220. The output of driver 219 and 220 are placed on lines 222. Lines 222 are data receive lines from RS-232 ports of remote computers. DEMUX 214 is available, for example, as part number 74L5259 from Motorola Corporation. Driver circuit 220 may be, for example a quad-line driver available as part number MC1488 from National Semiconductor Corporation.

Multiplexor 210 selects one of data transmit lines 221 and demultiplexor 214 selects one of data receive lines 222 so that the selected data transmit line and the selected data receive line are from the same remote computer.

A user of the computer terminal may select which remote computer to be coupled to the computer terminal by depressing one of SPST momentary on switches 202. Each of SPST momentary on switches 202 is connected to one of resistors 202 and to an input of an encoder 203. Resistors 201 may be, for example, 4.7 kilohm 5% resistors. Encoder 203 may be, for example an encoder available as part number 74LS148 from Texas Instruments Incorporated.

Encoder 203 encodes the identity of any depressed SPST momentary on switch 202 and places the encoded address on lines 204. The identity of this address is "captured" by latch circuit 205. This is done with the use of a delay 207 which receives a signal from encoder 204 on a line 226 when one of switches 202 is depressed. The signal is delayed slightly, to allow the inputs of latch 205 to settle, and then the signal is forwarded to latch 205 on line 227. Upon latch 205 receiving the signal on line 227, latch 205 latches the values on lines 204 onto address lines 206 indicating to MUX 210 and DEMUX 214 the selected remote computer. Latch 205 may be, for example, a latch circuit available as part number 74LS375 from Texas Instruments Incorporated. Delay circuit 207 may be, for example a delay available as part number 74LS02 from Texas Instruments Incorporated. The length of delay may be determined by a resistor 209 and a capacitor 208. Resistor 209 may be, for example, a ten thousand ohm 5 percent resistor. Capacitor may for example be a 0.01 microfarad capacitor.

A series of light emitting diodes (LED)s 212 may be used to identify which remote computer terminal is currently selected. A decoder and LED driver 211 receives as input address lines 206 and decodes them to drive one of LEDs 212, thus indicating the selected remote computer. Each of LEDs 212 are coupled to one of resistors 213. Resistors 213 may be for example two hundred twenty ohm, two percent resistors. Decoder and LED driver may be for example, a decoder available as part number 74LS138 from Texas Instruments Incorporated.

## Claims

1. A computing system having a computer terminal, a plurality of remote computers and a switch, wherein a terminal port from the computer terminal is electrically coupled to the switch and a port from each of the plurality of remote computers is coupled to the switch, **characterized** in that the switch comprises:
receiver means (217, 218), electrically coupled to the terminal port, for receiving signals transmitted from the terminal port and for transforming the voltage level of the signals from an original level to a second level;
selection means (210, 214), coupled to the receiving means, for selecting a first port from a first remote computer to receive the signals; and
driver means (219, 220), electrically coupled to the selection means and to the first port, for receiving the signals, for transforming the voltage level of the signals to the original level, and for delivering the transformed signals to the first port.

2. Computing system of claim 1, **characterized** in that the switch comprises:
first receiver means (218), electrically coupled to each port from each of the plurality of remote computers, for receiving signals transmitted from each port and for transforming the voltage level of the signals from an original level to a second level;
first selection means (210), coupled to the first receiving means (218), for selecting first signals from a first port of a first of the remote computers; and
first driver means (219), coupled to the first selection means and to the terminal port, for receiving the first signals, for transforming the voltage level of the first signals to the original level, and for delivering the transformed first signals to the terminal port.

3. Computing system as in claim 2, **character-**

ized in that the switch additionally comprises:

second receiving means (217), electrically coupled to the terminal port, for receiving terminal-originated signals transmitted from the terminal port and for transforming the voltage level of the terminal-originated signals from the original level to the second level;

second selection means (214), coupled to the second receiving means, for selecting the first port to receive the terminal-originated signals;

second driver means, coupled to the second selection means and to the first port for receiving the terminal-originated signals, for transforming the voltage level of the terminal-originated signals to the original level, and for delivering the transformed terminal-originated signals to the first port.

4. Computing system as in claim 2 or 3, characterized in that the first selection means includes:
user selection means (202) for detecting the selection by a user of the first remote computer;
encoding means (203), coupled to the user selection means, for encoding a first address of the first remote computer means;
multiplexing means (210), coupled to the encoding means (203) and to the first receiving means (218), for selecting, based on the first address, the first signals to be delivered to the first driver means.

5. Computing system as in claim 4, characterized in that the second selection means includes:
the user selection means (202);
the encoding means (203); and
demultiplexing means (214), coupled to the encoding means (203) and to the second receiving means (217), for selecting, based on the first address, the first port to receive the terminal-originated signals.

6. Computing system as in claim 5, characterized in that the switch additionally comprises a display means, electrically coupled to the encoding means, for displaying to the user a display identifying to the user the identity of the first remote computer.

7. Computing system as in one of the preceding claims, characterizd in that the terminal port is an RS-232 port.

8. A method in a computing system having a computer terminal having a terminal port, and a plurality of remote computers each of the plurality of remote computers having a computer port, for selecting which of the computer ports to electrically couple to the terminal port, characterized by:

(a) receiving signals from each of the computer ports;

(b) transforming the voltage level of the signals from an original level to a second level;

(c) selecting from the signals first signals which originate from a first computer port from a first remote computer;

(d) transforming the voltage level of the first signals to the original voltage level; and

(e) sending the transformed first signals to the terminal port.

9. A method as in claim 8 characterized by:

(a) receiving terminal signals from the terminal port;

(b) transforming the voltage level of the terminal signals from the original level to the second level;

(c) selecting the first computer port to receive the terminal signals;

(d) transforming the voltage level of the terminal signals to the original voltage level; and

(e) sending the transformed terminal signals to the first computer port.

Figure 1
(PRIOR ART)

Figure 2A

Figure 2B

Figure 2

Figure 2A

DRIVER — 220
DRIVER
222
216
DE MUX — 214
6 8 11 3
2,14
12,13
9,10
4,5
4 5 6 7 9 10 11
8 14 16 13
1 2 3
+5V

RECEIVER — 217, 215
RECEIVER — 218
221
1 4 8 11
3 6 10 13
MUX — 210
4 3 2 1 15 14 13
11 10 9 7 8 16 5
+5V
224

DECODER AND LED DRIVER — 211
15 14 13 12 11 10 9 16
1 2 3 6 5 4 8
+5V
213
219
212
206
To Fig. 2B

Figure 2B